# EUROPÄISCHE PATENTSCHRIFT

(11) **EP 1 585 778 B1**
(45) Veröffentlichungstag und Bekanntmachung des Hinweises auf die Patenterteilung: **15.09.2010**
(21) Anmeldenummer: 03815373.0
(22) Anmeldetag: 23.12.2003
(51) Int. Cl.: C08G 18/10, C08J 9/14

(54) **HYDROPHOBE TREIBGASMISCHUNGEN FÜR DIE ERZEUGUNG VON DÄMMSCHÄUMEN**
HYDROPHOBIC PROPELLANT GAS MIXTURES FOR PRODUCING INSULATING FOAMS
MELANGES DE GAZ PROPULSEURS HYDROPHOBES POUR LA PRODUCTION DE MOUSSES D'ISOLATION

(30) Priorität: 23.01.2003 DE 10302734
(43) Veröffentlichungstag der Anmeldung: 19.10.2005
(73) Patentinhaber: RATHOR AG, 9050 Appenzell (CH)
(72) Erfinder: SOMMER, Heinrich, CH-9040 Appenzell (CH); POGGENKLAS, Barbara, CH-9200 Gossau (CH)
(74) Vertreter: Thiel, Christian
(86) Internationale Anmeldenummer: PCT/EP2003/014765
(87) Internationale Veröffentlichungsnummer: WO 2004/065448

(56) Entgegenhaltungen:
- WO-A-00/04069
- WO-A-02/066532

## Beschreibung

Die Erfindung betrifft eine Prepolymerzusammensetzung für die Erzeugung von Dämmschäumen aus Druckbehältern, mit einer Prepolymerkomponenten, die ein Prepolymer mit Silan-Gruppen zur Vernetzung des Prepolymers mit einer zweiten Komponenten aufweist sowie übliche Zusätze, und einer Treibgaskomponenten, die unter dem im Druckbehälter herrschenden Druck flüssig ist und zumindest teilweise in der Prepolymerkomponenten gelöst vorliegt, wobei die Silangruppen Methyldimethoxysilangruppen oder Trimethoxysilangruppen sind, sowie die Verwendung von bestimmten Treibgasmischungen für die Erzeugung von Dämmschäumen aus polare reaktive Gruppen aufweisenden Prepolymeren.

Dämmschäume zum Ausschäumen von Hohlräumen werden vielfach als Ortschäume aus Druckdosen unter Verwendung von Polyurethan-Prepolymerabmischungen erzeugt. Hauptsächliche Anwendungsgebiete sind das Bauwesen, aber auch technische Produkte, bei denen Hohlräume zur Vermeidung von Schwitzwassernestern verfüllt werden müssen.

Prepolymere zur Erzeugung von Polyurethan-Dämmschäumen besitzen zur Vernetzung befähigte Polyisocyanat-Gruppen, die mit einer Polyolkomponente oder Wasser unter Bildung des eigentlichen Polymeren reagieren. Die Schaumstruktur wird durch bei der Reaktionen mit Wasser erzeugtes CO₂ und/oder in der Prepolymerabmischung vorhandenes Treibgas erzeugt. Zur Verschäumung von Isocyanat-Gruppen enthaltenden Prepolymerzusammensetzungen werden derzeit überwiegend Treibgasmischungen verwandt, die Butane, Propan, Dimethylether, gegebenenfalls zusammen mit Flurkohlenstoffen enthalten.

Aus der WO 00/04069 A1 sind weiterhin Prepolymerabmischungen bekannt, die angehängt an ein Polyurethan-Gerüst, terminale Silan-Gruppen als reaktive Gruppen aufweisen, die geeignet sind, mit Wasser als zweiter Komponente zu reagieren. Bei dieser Reaktion wird ein Alkanol, üblicherweise Methanol, freigesetzt.

Grundsätzlich haben diese silanterminierten Schäume den Vorteil, daß die dazu verwandten Prepolymere nicht über toxische Isocyanatfunktionen verfügen. Das bei den silanterminierten Schäumen freigesetzte Methanol wird, auch wegen der relativ geringen Mengen und schnellen Verdunstung, als wenig problematisch angesehen. Insoweit haben die silanterminierten Prepolymere das Potential, die herkömmlichen isocyanatterminierten Prepolymere zu ersetzen.

Bei der Verschäumung von silanterminierten Prepolymeren mit üblichen Treibgasmischungen werden jeweils Schäume mit sehr feiner Zellstruktur erhalten, soweit diese Schäume auf einer ebenen Arbeitsfläche ausgebracht werden. Beim Ausschäumen von Fugen, wie das in der Praxis bei der Einschäumung von Tür- und Fensterzargen der Fall ist, stellt man aber fest, daß der aus der Fuge herausgequollene Schaum eine gute Zellstruktur aufweist, die Schaumstruktur innerhalb der Fuge jedoch Fehlstellen und Risse aufweist, die zumindest die Dämmwirkung des Schaums, teilweise jedoch auch seine Montageeigenschaften in Frage stellen. In extremen Fällen wird der praktisch vollständige Kollaps des Schaums festgestellt.

Untersuchungen haben ergeben, daß diese Probleme mit Schäumen aus silanterminierten Prepolymeren mit der Freisetzung von Methanol zusammenhängen. Das Methanol weicht beim Austritt aus dem Schaum die Zellstrukturen auf und macht sie aufnahmefähig für das Treibgas. Der Verlust des Treibgases vor der endgültigen Aushärtung bringt den Schaum zum Kollaps. Rißfreie Schaumstrukturen mit guter Zellstruktur können aus silanterminierten Prepolymeren jedenfalls mit herkömmlichen Treibgasmischungen, wie sie aus der Verschäumung von Isocyanat-Gruppen enthaltenden Prepolymeren bekannt sind, etwa Butan-, Propan-, Dimethylether-, Fluorkohlenwasserstoffmischungen, nicht erzielt werden.

Dementsprechend liegt der Erfindung die Aufgabe zugrunde, eine Prepolymerzusammensetzung insbesondere für die Erzeugung von Dämmschäumen aus silanterminierten Prepolymeren bereitzustellen, die hinsichtlich der Sohaumstabilität und des Rißverhaltens verbessert sind.

Es wurde überraschend gefunden, daß Prepolymerzusammensetzungen der eingangs genannten Art dann stabile und gute Schäume ergeben, wenn sie mit einer treibgaskomponente ausgerüstet werden, die einen Wert log P_{O/W} von ≥ 1,90 aufweist, wenn die Silangruppen Methyldimethoxysilan-Gruppen sind und einen Wert von ≥ 2,35 aufweist, wenn die Silangruppen Trimethoxysilan-Gruppen sind, wobei P_{O/W} der Verteilungskoeffizient der Treibgaskomponente in Oktanol/Wasser ist. Bevorzugt beträgt der Wert log P_{O/W} ≥ 1,90.

Silan-Gruppen im Sinne der Erfindung sind vorzugsweise terminale Silan-Gruppen an einem an und für sich bekannten Polyurethangerüst und insbesondere Methoxysilan-Gruppen. Die Funktionalität des Prepolymers beträgt ≥ 2. Trimethoxysilan- und Methyldimethoxysilanfunktionen, werden erfindungsgemäß eingesetzt.

Die Polarität bzw. Hydrophobie der Treibgaskomponente scheint einen entscheidenden Einfluß auf die Schaumstabilität auszuüben. Der Verteilungskoeffizient P_{O/W} gibt, hier in logarithmischer Darstellung, die Verteilung eines Stoffes in einem unpolaren (Oktanol) und einem polaren (Wasser) Lösungsmittel wieder. Je größer der Wert von log P_{O/W} ist, desto geringer ist die Polarität des gemessenen Stoffes und desto größer ist seine Affinität für unpolare Kohlenwasserstoffe und seine Hydrophobie.

Erfindungsgemäß wird der dekadische Logarithmus des P_{O/W}-Wertes eines Treibmittels herangezogen. Bei Treibgasmischungen, wie sie üblicherweise verwandt werden, wird das mit der Treibgasmenge in Gramm gewichtete Mittel der log P_{O/W}-Werte der einzelnen Trelbgase der Mischung berechnet und als Grenzkriterium genommen. Es hat sich gezeigt, daß das gewichtete Mittel der logarithmischen Werte eine hinreichend genaue Näherung darstellt.

Im Ergebnis wurde gefunden, daß bei den silangruppenhaltigen Prepolymeren die Unpolarität der Treibgaskomponente einhergeht mit der Polarität der Prepolymerkomponente und/oder der aus den reaktiven Gruppen freigesetzten Agenzien, etwa dem Methanol oder dem Ethanol aus methoxy- oder ethoxysilanterminierten Prepolymeren.

Die erfindungsgemäßen Bemessungsregeln gelten sowohl für Einkomponentenschäume als auch für Zweikomponentenschäume. Sie sind ebenfalls anwendbar auf Schäume, die nur teilweise mit einer zweiten, innerhalb eines Druckbehälters ausgelösten Komponente abreagieren und im übrigen mit in der Atmosphäre enthaltenem Wasser, sogenannte 1,5-K-Schäume.

Es wird angenommen, daß der erfindungsgemäße stabilisierende Effekt der unpolaren bzw. hydrophoben Einstellung der Treibgaskomponente darauf beruht, daß die Treibgase innerhalb der nach dem Ausschäumen gebildeten Zellen besser zurückgehalten werden, weil sie sich nur schlecht in den gegebenenfalls noch zusätzlich mit Methanol oder Ethanol angereicherten polaren Zellmembranen lösen. Durch die Verzögerung des Lösungseffekts hat das Prepolymer Zeit, zu vernetzen, der Alkohol Zeit, abzudampfen und der Schaum Zeit, auszuhärten.

Bei den erfindungsgemäßen verwandten Prepolymerkomponenten handelt es sich um solche, wie sie aus dem Stand der Technik bekannt sind. Diese können beispielsweise isocyanatterminiert sein, aber auch silanterminiert, wie beispielsweise aus der WO 00/04069 A1 bekannt. Derartige silanterminierte Prepolymere basieren auf einem üblichen Polyurethangerüst aus einem aromatischen oder aliphatischen Polyisocyanat und einem Polyol, dessen Isocyanat-Gruppen durch Umsetzung mit einer damit reaktiven Silanverbindung umfunktionalisiert wurden. Dafür geeignete Silan-Gruppen sind beispielsweise Aminomethoxysilane, insbesondere N-Phenylaminomethyltrimethoxysilan und N-Phenylaminomethyldimethoxymethylsilan. Einzelheiten derartiger Prepolymere sind der WO 00/04069 A1 sowie den WO 02166532 A1, WO 02/68491 A1, WO 02/70586 A1 und WO 02/77072 A1 zu entnehmen, deren Rezepturen hier ausdrücklich einbezogen werden.

Der einzuhaltende Mindestwert für den log P_{O/W} ist im bestimmten Umfang abhängig von der Polarität des Prepolymers bzw. der Polarität des aus dem Prepolymer freigesetzten Produkts der Vernetzungsreaktion und dessen Menge. So ist ein Grenzwert von log P_{O/W} ≥ 1,90 in jedem Fall zutreffend für dimethoxymethylsilanterminierte Prepolymere, die bei der Vernetzung nur zwei Moleküle Methanol pro Silaneinheit freisetzen. Bei der Verwendung von trimethoxysilanterminierten Prepolymeren werden drei Moleküle Methanol pro Silan-Gruppe freigesetzt, davon die letzte in einer verzögerten Vernetzungsreaktion nach den beiden ersten. Um der größeren Methanolmenge Rechnung zu tragen, ist hier ein höherer log P_{O/W}-Wert von ≥ 2,35 oder sogar 2,40 angezeigt, um eine hinreichende Schaumqualität zu gewährleisten.

Wie schon angemerkt, handelt sich bei den zum Einsatz kommenden Treibgaskomponenten um solche, die unpolar und hydrophob eingestellt sind. Besonders geeignete Treibgase sind Kohlenwasserstoffe mit bis zu 5 C-Atomen, sowohl gesättigte wie auch ungesättigte, sowie Fluorkohlenwasserstoffe, und insbesondere i-Butan, n-Butan, Propan, R227ea (1,1,1,2,3,3,3-Heptafluorpropan), R365mfc (1,1,1,3,3-Pentafluorbutan), R245fa (1,1,1,3,3-Pentafluorpropan), R134a (1,1,1,2-Tetrafluorethan), R152a (1,1-Difluorethan) und, eingeschränkt, DME (Dimethylether). Diese Treibgase können allein, in beliebiger Mischung sowie in Abmischung mit anderen treibgasfähigen Verbindungen eingesetzt werden. Im allgemeinen sollte die Treibgaskomponente, je nach Einsatzgebiet und Einsatzbedingungen einen. Siedepunkt von ≤ 40 °C und insbesondere ≤ 20 °C aufweisen. In der Regel handelt es sich um verflüssigbare Gase, die in dem Druckbehälter zumindest teilweise, vorzugsweise ganz in der Prepolymerkomponenten gelöst und/oder stabil emulgiert vorliegen.

Um die Löslichkeit und Viskosität der Prepolymerzusammensetzung auf für Druckbehälter und die Ausbringung aus Druckbehältern zuträgliche Werte zu bringen, ist es insbesondere bevorzugt, die Zusammensetzung mit üblichen viskositäts- und löslichkeitsbeeinflussenden Zusätzen zu versehen. Die Viskosität kann beispielsweise mit üblichen Phosphaten, die gleichzeitig flammhemmende Wirkung haben, eingestellt werden, etwa mit Triethylphosphat. Zur Regulierung der Viskosität kann ferner in bekannter Weise Vinyltrimethoxysilan eingesetzt werden, das einen positiven Einfluß auf die Löslichkeit der Treibgaskomponente in der Prepolymerkomponente hat. Vinyltrimethoxysilan dient gleichzeitig als Haftvermittler für das Produkt, setzt aber zusätzliche Methanolmengen bei der Reaktion mit Luftfeuchtigkeit frei. Insoweit kann die Polarität der Prepolymerkomponente, ihr Gehalt an freisetzbarem Methanol, ihre Aufnahmefähigkeit/Lösungsvermögen für die Treibgaskomponente und die Polarität des gebildeten Schaums durch den Vinyltrimethoxysilangehalt der Prepolymerzusammensetzung beeinflußt und eingestellt werden.

Dimethylether kann zur Feinabstimmung der Polarität der Treibgaskomponente eingesetzt werden, da es einen ausgesprochen niedrigen log P_{O/W}-Wert hat. Im allgemeinen ist Dimethylether aber nicht zur Erzielung höherer log P_{O/W}-Werte geeignet.

Die Treibgaskomponente macht im allgemeinen 20 bis 40 Volumen-% der erfindungsgemäßen Prepolymerzusammensetzung aus, insbesondere etwa 25 bis 35 Volumen%. Dabei besteht die Treibgaskomponente zu vorzugsweise wenigstens 2/3 aus unpolaren Bestandteilen, insbesondere wenigstens zu 5/6. Als unpolare Bestandteile werden dabei Bestandteile mit einem log P_{O/W}-Wert von ≥ 1,35 angesehen.

Eine Übersicht über die log P_{O/W}-Werte einiger geeigneter Treibgase ist nachstehend wiedergegeben.

| Treibgas | log P_{O/W} |
|---|---|
| i-Butan | 2,8 |
| R227ea | 2,5 |
| Propan | 2,3 |
| R365mfc | 1,6 |
| R245fa | 1,35 |
| R134a | 1,06 |
| R152a | 0,75 |
| DME | 0,1 |

Im übrigen enthalten die erfindungsgemäßen Prepolymerzusammensetzungen übliche Zusätze und Additive, wie Katalysatoren aus den Herstellungs- und für die Vernetzungsreaktion, Stabilisatoren, Viskositäts- und Rheologieregulatoren, Zellregulatoren, Weichmacher, Flammschutzmittel und dergleichen.

Die Erfindung wird durch die nachstehenden Beispiele näher erläutert.

### Herstellung des PU-Prepolymers:

Das Prepolymer wird erhalten durch Umsetzung von TDI Typ T80 mit einem Polypropylenglykol MG = 400 im molaren Verhältnis NCO : OH = 2,0. Diese Prepolymere werden in üblicher Weise dadurch hergestellt, daß das TDI unter Schutzgas im Reaktor vorgelegt und mit dem Polyol unter Kontrolle der Temperatur so versetzt wird, daß 80 °C nicht überschritten werden. Nach beendeter Polyolzugabe wird noch 3 h bei 80 °C gehalten. Der NCO-Gehalt des fertigen Prepolymers liegt bei theoretischen 11,2 % und wird titrimetrisch ermittelt durch die Umsetzung von Prepolymer mit Dibutylamin in toluolischer Lösung und anschießender Rücktitration mit HCl-Lösung. Nach Erreichen eines konstanten NCO-Gehalts wird Vinyltrimethoxysilan zugegen und noch 5 min kräftig gerührt.

### Zusammensetzung für die Rezepturen:

| | |
|---|---|
| 434 g | Desmodur T80 (Bayer AG) |
| 497 g | Voranol P400 (DOW) |
| 82 g | Vinyltrimethoxysilan |

### Herstellung des silanterminierten Prepolymers:

Das so erhaltene Prepolymer wird direkt mit den Additiven (Schaumstabilisator, Aminkatalysator), Vinyltrimethoxysilan als Verdünnungsmittel und Haftvermittler) in die Aerosoldose eingewogen. Dann erfolgt die leicht überstoichiometrische Zugabe des Aminosilans, das Verschließen mit einem üblichen Ventil und sofortiges Aufdrücken des Treibgases. Nach beendeter Zugabe wird kräftig geschüttelt. Die Innentemperatur steigt innerhalb von 30 s um 20 bis 30 °C. Die Dosen sind nach einer Nacht Lagerung bei Raumtemperatur gebrauchsfertig.

Zur Reaktionskontrolle wird der Doseninhalt FT-IR-spektroskopisch untersucht. Es ist kein Isocyanatpeak mehr nachweisbar.

| | |
|---|---|
| Prepolymer 1: | Umsetzungsprodukt von PU-Prepolymer mit N-Phenylaminomethyltrimethoxysilan. |
| Prepolymer 2: | Umsetzungsprodukt von PU-Prepolymer mit N-Phenylaminomethyldimethoxymethylsilan. |

### Rezepturen

Unter Verwendung der vorstehend beschriebenen silanterminierten Prepolymere wurden die in der nachstehenden Tabelle aufgeführten Prepolymerzusammensetzungen mit den angegebenen Treibgaskomponenten hergestellt und aus einer herkömmlichen Druckdose verschäumt. Der verwandte Stabilisator ist ein Schaumstabilisator der Firma Goldschmidt AG in Essen, der Katalysator ZF-20 Bis-(2-dimethylaminoethyl)ether der Firma Huntsman.

Zur Auswertung wurden zwei Spanplatten mit den Abmessungen 14 x 14 x 1,9 cm 20 s in Wasser eingetaucht. Dann wurden die Platten 100 s senkrecht aufgestellt, um das Wasser ablaufen zu lassen und stehende Nässe zu vermeiden. Mit Fugenabstandshaltern (Stäben aus Polyethylen) wurde eine liegende Fuge der Dimension 14 x 9,5 x 2,5 cm dargestellt. Die Fuge wurde mit einem Gewicht von 12,5 kg beschwert und vollständig ausgeschäumt. Nach einem Tag wurde der herausgequollene Schaum abgeschnitten und die Schaumqualität in der Fuge beurteilt. Dazu wurde die Fuge längs durchgeschnitten. Zur Bewertung wurden die Werte 1 (homogen durchgehärtete Schaumfuge), 2 (Rißbildung in der Schaumfuge) und 3 (kompletter Kollaps in der Fuge) vergeben. Die Ergebnisse sind ebenfalls in der nachstehenden Tabelle wiedergegeben.

### Rezepturen

| Versuch Nr. | 1 | 2 | 3 | 4 | 5 | 6* | 7* | 8* | 9* | 10 |
|---|---|---|---|---|---|---|---|---|---|---|
| Prepolymer 1 | 100 | 100 | 100 | 100 | 100 | 100 | | 100 | | |
| Prepolymer 2 | | | | | | | | 100 | 100 | 100 |
| Tegostab B8443 | 2,4 | 2,4 | 2,4 | 2,4 | 2,4 | 2,4 | 2,4 | 2,4 | 2,4 | 2,4 |
| Katalysator ZF-20 | 0,8 | 0,8 | 0,8 | 0,8 | 0,8 | 0,8 | 0,8 | 0,8 | 0,8 | 0,8 |
| | | | | | | | | | | |
| Treibgas | | | | | | | | | | |
| R134a | | | | 3 | | | | 43 | | |
| Propan | 6,5 | 4,5 | | 6 | 6 | 6 | 4,5 | | 6 | 6 |
| i-Butan | 13 | 9 | | 12 | 12 | 12 | 9 | | 12 | 12 |
| DME | | | | | | 3 | | | 10 | 5 |
| R152a | | | | | 3 | | | | | |
| R365mfc | | | | | | | | | | |
| R227 | | 12 | 50 | | | | | | | |
| R245 | | | | | | | 12 | | | |
| Vol.-% | 26% | 25% | 25% | 26% | 26% | 26% | 25% | 26% | 32% | 28%. |
| Ø log P_{O/W} | 2,63 | 2,57 | 2,50 | 2,41 | 2,36 | 2,27 | 2,03 | 1,06 | 1,73 | 2,08 |
| Fugenbewertung | 1 | 1 | 1 | 1 | 2 | 3 | 3 | 3 | 3 | 1 |
| Schaumstrang Ø 2 cm | feinzellig | feinzellig | feinzellig | feinzellig | feinzellig | feinzellig | feinzellig | feinzellig | feinzellig | feinzellig |

| | | | | | | | | | | |
|---|---|---|---|---|---|---|---|---|---|---|
| *Vergleich Alle Angaben in Gewichtsteilen, soweit nicht anders angegeben. | | | | | | | | | | |

## Patentansprüche

1. Prepolymerzusammensetzung, insbesondere für die Erzeugung von Dämmschäumen aus Druckbehältern, mit einer Prepolymerkömponenten, die ein Prepolymer mit Silan-Gruppen zur Vernetzung des Prepolymers mit einer zweiten Komponenten aufweist sowie übliche Zusätze, und einer Treibgaskomponenten, die unter dem im Druckbehälter herrschenden Druck flüssig ist und zumindest teilweise in der Prepolymerkomponenten gelöst vorliegt, wobei die Silangruppen Methyldimethoxysilan-Gruppen oder Trimethoxysilan-Gruppen sind, **dadurch gekennzeichnet, daß** die Treibgaskomponente einen Wert von log P_{O/W} ≥ 1,90 aufweist, wenn die Silan-Gruppen Methyldimethoxysilan-Gruppen sind und einen Wert von log P_{O/W} ≥ 2,35 aufweist, wenn die Silan-Gruppen Trimethoxysilan-Gruppen sind, wobei P_{O/W} für den Verteilungskoeffizienten der Treibgaskomponente in Oktanol/Wasser steht.

2. Prepolymerzusammensetzung nach Anspruch 1, **dadurch gekennzeichnet, daß** die Treibgaskomponente einen Siedepunkt von ≤ 40 °C hat.

3. Prepolymerzusammensetzung nach einem der vorstehenden Ansprüche, **dadurch gekennzeichnet, daß** die Treibgaskomponente einen Siedepunkt von ≤ 20 °C hat.

4. Prepolymerzusammensetzung nach einem der vorstehenden Ansprüche, **dadurch gekennzeichnet, daß** die Treibgaskomponente i-Butan, n-Butan, Propan, R227ea, R365mffc, R245fa, R134a, R152a, Dimethylether oder Mischungen derselben untereinander oder mit weiteren Treibgasen enthält.

5. Prepolymerzusammensetzung nach einem der vorstehenden Ansprüche, **dadurch gekennzeichnet, daß** die Treibgaskomponente 20 bis 40 Volumen-% der Prepolymerzusammensetzung ausmacht.

6. Prepolymerzusammensetzung nach einem der vorstehenden Ansprüche, **dadurch gekennzeichnet, daß** die Treibgaskomponente zu wenigstens 2/3 aus unpolaren Treibmitteln besteht.

7. Prepolymerzusammensetzung nach einem der vorstehenden Ansprüche, **dadurch gekennzeichnet, daß** die Treibgaskomponente zu wenigstens 5/6 aus unpolaren Bestandteilen besteht.

8. Verwendung einer Treibgasmischung mit einem Wert log P_{O/W} von ≥ 1,90 zur Erzeugung von Dämmschäumen aus Methyldimethoxysilan-Gruppen enthaltenden Prepolymeren in Druckbehältern.

9. Verwendung einer Treibgasmischung mit einem Wert log P_{O/W} ≥ 2,35 zur Erzeugung von Dämmschäumen aus Trimethoxysilan-Gruppen enthaltenden Prepolymeren in Druckbehältern.

10. Verwendung nach Anspruch 8 oder 9, **dadurch gekennzeichnet, daß** das Prepolymer ein silanterminiertes Prepolymer ist.

11. Verwendung nach einem der Ansprüche 8 bis 10, **dadurch gekennzeichnet, daß** die Treibgaskomponente i-Butan, n-Butan, Propan, R227ea, R365mffc, R245fa, R134a, R152a, Dimethylether oder Mischungen derselben untereinander oder mit weiteren Treibgasen enthält.

## Claims

1. Prepolymer composition particularly for the production of insulating foams to be delivered from pressure packs, with a prepolymer component comprising a prepolymer with silane groups for cross-linking the prepolymer with a second component and containing customary additives, and a propellant gas component which is liquid under the pressure prevailing in the pressure pack and which is at least partially dissolved in the prepolymer component, the silane groups being methyldimethoxysilane group or trimethoxysilane groups **characterized in that,** the propellant gas component has a log P_{O/W} value of ≥ 1.90 when the silane groups are methyldimethoxysilane groups and a log P_{O/W} value of ≥ 2.35, when the silane groups are trimethoxysilane groups, where P_{O/W} denotes the distribution coefficient of the propellant gas component in octanol/water.

2. Prepolymer composition according to claim 1, **characterized in that** the propellant gas component has a boiling point of ≤ 40 C.

3. Prepolymer composition according to at least one of the above claims, **characterized in that** the propellant gas component has a boiling point of ≤ 20 C.

4. Prepolymer composition according to at least one of the above claims, **characterized in that** the propellant gas component contains i-butane, n-butane, propane, R227ea, R365mffc, R245fa, R134a, R152a, dimethyl ether or blends of these constituents with each other or with other propellant gases.

5. Prepolymer composition according to at least one of the above claims, **characterized in that** the propellant gas component represents 20 through 40 % v/v of the prepolymer composition.

6. Prepolymer composition according to at least one of the above claims, **characterized in that** at least 2/3 of the propellant gas component consist of non-polar propellants.

7. Prepolymer composition according to at least one of the above claims, **characterized in that** at least 5/6 of the propellant gas component consist of non-polar propellants.

8. Use of a propellant gas mixture having a log P_{O/W} value of ≥ 1.90 for the production of insulating foams from prepolymers containing methyldimethoxysilane groups in pressure packs.

9. Use of a propellant gas mixture having a log P_{O/W} value of ≥ 2.35 for the production of insulating foams from prepolymers containing trimethoxysilane groups in pressure packs.

10. Use according to claim 8 or 9, **characterized in that** the prepolymer is a silane-terminated prepolymer.

11. Use according to at least one of the above claims 8 to 10, **characterized in that** the propellant gas component contains i-butane, n-butane, propane, R227ea, R365mffc, R245fa, R134a, R152a, dimethyl ether or blends of these constituents with each other or with other propellant gases.

## Revendications

1. Composition de prépolymère, en particulier pour la préparation de matières alvéolaires isolantes à partir de récipients sous pression, ayant un composant prépolymère qui possède un prépolymère ayant des groupes silane pour l'utilisation du prépolymère avec un deuxième composant, ainsi que des additifs classiques, et un composant gaz propulseur, qui est liquide sous la pression qui règne dans le récipient sous pression et se trouve au moins partiellement dissous dans le composant prépolymère, tandis que les groupes silane sont des groupes méthyldiméthoxysilane ou des groupes triméthoxysilane, **caractérisée en ce que** le composant gaz propulseur présente une valeur de log P_{O/W} ≥ 1,90, lorsque les groupes silane sont des groupes méthyldiméthoxysilane, et présente une valeur de log P_{O/W} ≥ 2,35, lorsque les groupes silane sont des groupes triméthoxysilane, tandis que P_{O/W} désigne le coefficient de partage du composant gaz propulseur dans l'octanol/eau.

2. Composition de prépolymère selon la revendication 1, **caractérisée en ce que** le composant gaz propulseur a un point d'ébullition de ≤ 40°C.

3. Composition de prépolymère selon l'une des revendications précédentes, **caractérisée en ce que** le composant gaz propulseur a un point d'ébullition de ≤ 20°C.

4. Composition de prépolymère selon l'une quelconque des revendications précédentes, **caractérisée en ce que** le composant gaz propulseur contient de l'isobutane, n-butane, propane, R227ea, R365mffc, R245fa, R134a, R152a, éther de diméthyle ou des mélanges de ceux-ci entre eux ou avec d'autres gaz propulseurs.

5. Composition de prépolymère selon l'une quelconque des revendications précédentes, **caractérisée en ce que** le composant gaz propulseur représente 20 à 40% en volume de la composition de prépolymère.

6. Composition de prépolymère selon l'une quelconque des revendications précédentes, **caractérisée en ce que** le composant gaz propulseur consiste pour au moins 2/3 en des agents propulseurs non-polaires.

7. Composition de prépolymère selon l'une quelconque des revendications précédentes, **caractérisée en ce que** le composant gaz propulseur consiste pour au moins 5/6 en des constituants non-polaires.

8. Utilisation d'un mélange de gaz propulseurs ayant une valeur log P_{O/W} de ≥ 1,90 pour la production de matières alvéolaires isolantes à partir de prépolymères contenant des groupes méthyldiméthoxysilane dans des récipients sous pression.

9. Utilisation d'un mélange de gaz propulseurs ayant une valeur log P_{O/W} de ≥ 2,35 pour la production de matières alvéolaires isolantes à partir de prépolymères contenant des groupes triméthoxysilane dans des récipients sous pression.

10. Utilisation selon la revendication 8 ou 9, **caractérisée en ce que** le prépolymère est un prépolymère à terminaisons silane.

11. Utilisation selon l'une des revendications 8 à 10, **caractérisée en ce que** le composant gaz propulseur contient de l'isobutane, n-butane, propane, R227ea, R365mffc, R245fa, R134a, R152a, éther de diméthyle ou des mélanges de ceux-ci entre eux ou avec d'autres gaz propulseurs.
